(19) **Europäisches Patentamt**
**European Patent Office**
**Office européen des brevets**

(11) **EP 3 147 687 B1**

(12) **EUROPEAN PATENT SPECIFICATION**

(45) Date of publication and mention
of the grant of the patent:
**26.09.2018 Bulletin 2018/39**

(51) Int Cl.:
**G01S 13/90** *(2006.01)*

(21) Application number: **16161226.2**

(22) Date of filing: **18.03.2016**

(54) **METHOD AND DEVICE FOR REAL-TIME PROCESSING OF ELEVATION DIGITAL BEAM-FORMING**

VERFAHREN UND VORRICHTUNG ZUR ECHTZEITVERARBEITUNG VON DIGITALER STRAHLFORMUNG IN ELEVATION

PROCÉDÉ ET DISPOSITIF POUR LE TRAITEMENT EN TEMPS RÉEL D'UNE FORMATION DE FAISCEAU NUMÉRIQUE À ÉLÉVATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2015 CN 201510629703**

(43) Date of publication of application:
**29.03.2017 Bulletin 2017/13**

(73) Proprietor: **Institute of Electronics, Chinese Academy of Sciences Beijing (CN)**

(72) Inventors:
• **Wang, Yu**
**Beijing (CN)**
• **Wang, Wei**
**Beijing (CN)**
• **Deng, Yunkai**
**Beijing (CN)**
• **Wang, Chunle**
**Beijing (CN)**

(74) Representative: **Gulde & Partner Patent- und Rechtsanwaltskanzlei mbB Wallstraße 58/59 10179 Berlin (DE)**

(56) References cited:
**CN-A- 103 885 052     US-A- 5 461 389**

• **PAULSEN LEE ET AL: "Impact: a low cost, reconfigurable, digital beamforming common module building block for next generation phased arrays", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9479, 14 May 2015 (2015-05-14), pages 947906-947906, XP060052877, DOI: 10.1117/12.2179712 ISBN: 978-1-62841-730-2**

**Description**

**TECHNICAL FIELD**

The present disclosure relates to multichannel techniques for a Synthetic Aperture Radar (SAR), and in particular to a method and device for real-time processing of elevation Digital Beam-Forming (DBF) of a spaceborne SAR.

**BACKGROUND**

Elevation DBF is critical to a spaceborne SAR, and it is one of main techniques for implementing high-resolution, wide-swath imaging. A spaceborne SAR requires higher real time capability to implement high-resolution, wide-swath imaging, thus DBF is required to have higher real time capability; accordingly, it is of great significance to study a method for implementing real-time DBF on a satellite.

At present, an existing DBF method includes the following steps: signals collected by antennas are orthogonally demodulated to baseband signals; then a baseband signal of each channel is weighted in complex number field according to a weighting value of DBF in complex number field; finally, weighted signals in complex number field are summed to obtain a final DBF result. However, many real multipliers are required to be used during demodulation of intermediate frequency signals when the above method is used, therefore, it makes the complexity of corresponding algorithms high and thus doesn't facilitate real-time DBF processing for spaceborne SARs, therefore limiting development and application of spaceborne DBF-SARs.

Paulsen Lee et al: "Impact: a low cost, reconfigurable, digital beamforming common module building block for next generation phased arrays" (Proc. SPIE 9479, Open Architecture/Open Business Model Net-Centric Systems and Defense Transformation 2015, 947906 (May 21, 2015)) discloses that phased array systems offer numerous advantages to the modern warfighter in multiple application spaces, including Radar, Electronic Warfare, Signals Intelligence, and Communications. However, a lack of commonality in the underlying technology base for DoD Phased Arrays has led to static systems with long development cycles, slow technology refreshes in response to emerging threats, and expensive, application-specific sub-components. The IMPACT module (Integrated Multi-use Phased Array Common Tile) is a multi-channel, reconfigurable, cost-effective beamformer that provides a common building block for multiple, disparate array applications.

**SUMMARY**

In view of the above, to solve problems existing in the prior arts, the present disclosure is intended to provide a real-time elevation DBF processing method and device, which can reduce effectively complexity of real-time DBF processing and shorten time taken by elevation DBF.

The technical solutions of the disclosure are implemented as follows.

An embodiment of the disclosure provides a real-time elevation Digital Beam-Forming (DBF) processing method, including:

weighting and summing processing is performed on an intermediate frequency signal obtained from sampling made on each channel to obtain two channels of combined intermediate frequency signals;
frequency mixing-based orthogonal demodulation is performed on signals in real number field of the two channels of combined intermediate frequency signals respectively; and
cross summation is performed on two channels of demodulated intermediate frequency signals and resulting signals are low-pass filtered.

In this embodiment, the step that frequency mixing-based orthogonal demodulation is performed on the two channels of combined intermediate frequency signals respectively may include:
signals of two different frequencies are mixed, and the two channels of combined intermediate frequency signals are demodulated using the mixed signal.

In an embodiment, the step that weighting and summing processing is performed on the intermediate frequency signal obtained from sampling made on each channel to obtain the two channels of combined intermediate frequency signals may include:

the intermediate frequency signal obtained from sampling made on each channel is weighted according to a weighting function generated according to the principle of elevation DBF; and
cross summation is performed on weighted intermediate frequency signals.

In an embodiment, the step that the intermediate frequency signal obtained from sampling made on each channel is weighted may include:

the weighting function is generated according to the principle of elevation DBF; and
the intermediate frequency signal obtained from sampling made on each channel is weighted in real number field according to the weighting function to obtain two channels of weighted intermediate frequency signals;
wherein the weighting function comprises a sine function and a cosine function.

In an embodiment, the step that cross summation is performed on the weighted intermediate frequency signals to obtain the two channels of combined intermediate frequency signals may include:

intermediate frequency signals weighted by the cosine function are summed; and
intermediate frequency signals weighted by the sine function are summed.

An embodiment of the disclosure further provides a real-time elevation DBF processing device, including:

an arithmetic unit configured to perform weighting and summing processing on an intermediate frequency signal obtained from sampling made on each channel to obtain two channels of combined intermediate frequency signals;
a demodulation unit configured to perform frequency mixing-based orthogonal demodulation on signals in real number field of the two channels of combined intermediate frequency signals respectively; and
a low-pass filtering unit configured to perform cross summation on two channels of demodulated intermediate frequency signals and low-pass filter resulting signals.

In this embodiment, the demodulation unit may be configured to mix signals of two different frequencies and demodulate the two channels of combined intermediate frequency signals using the mixed signal.

In an embodiment, the arithmetic unit may be configured to weight the intermediate frequency signal obtained from sampling made on each channel, and perform cross summation on weighted intermediate frequency signals.

In an embodiment, the arithmetic unit may be specifically configured to generate the weighting function according to the principle of elevation DBF, and weight, in real number field, the intermediate frequency signal obtained from sampling made on each channel according to the weighting function to obtain two channels of weighted intermediate frequency signals, the weighting function comprising a sine function and a cosine function.

In an embodiment, the arithmetic unit may be specifically configured to sum intermediate frequency signals weighted by the cosine function and sum intermediate frequency signals weighted by the sine function.

In the real-time elevation DBF processing method and device provided by the embodiments of the disclosure, weighting and summing processing is performed on an intermediate frequency signal obtained from sampling made on each channel to obtain two channels of combined intermediate frequency signals; frequency mixing-based orthogonal demodulation is performed on signals in real number field of the two channels of combined intermediate frequency signals respectively; and cross summation is performed on two channels of demodulated intermediate frequency signals and resulting signals are low-pass filtered to obtain signals subjected to DBF. In this way, numbers of real multipliers used during the implementation according to the disclosure under different numbers of channels are all obviously smaller than those according to the prior arts, and the complexity of computation in an SAR system can be reduced greatly when DBF is implemented, thereby reducing effectively complexity of real-time DBF processing and shortening time taken by elevation DBF.

## BRIEF DESCRIPTION OF THE DRAWINGS

Fig. 1 is a flow chart of a real-time elevation DBF processing method according to an embodiment of the disclosure;
Fig. 2 is a schematic structural diagram of a real-time elevation DBF processing device according to an embodiment of the disclosure;
Fig. 3 is a schematic diagram showing the principle for implementing real-time elevation DBF processing according to a preferred embodiment of the disclosure;
Fig. 4 is a schematic diagram showing the principle for implementing real-time elevation DBF processing according to the prior arts; and
Fig. 5 shows a comparison of the number of real multipliers used in an embodiment of the disclosure and in the prior arts.

## DETAILED DESCRIPTION

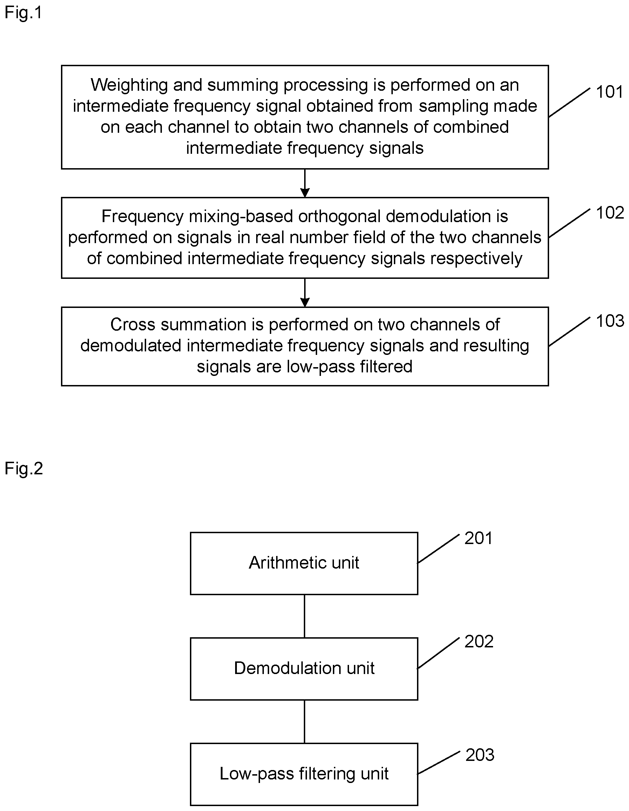

The disclosure will be further elaborated below in connection with embodiments with reference to accompanying drawings. Fig. 1 is a flow chart of a real-time elevation DBF processing method according to an embodiment of the disclosure, as shown in Fig. 1, the embodiment provides a real-time elevation DBF processing method, which includes steps as follows.

Step 101, weighting and summing processing is performed on an intermediate frequency signal obtained from sampling made on each channel to obtain two channels of combined intermediate frequency signals;

specifically, the step includes: the intermediate frequency signal obtained from sampling made on each channel is weighted according to a weighting function generated according to the principle of elevation DBF; and cross summation is performed on weighted intermediate frequency signals to obtain the two channels of combined intermediate frequency signals.

Here, the operation of weighting the intermediate frequency signal obtained from sampling made on each channel includes: the weighting function is generated according to the principle of elevation DBF, and the intermediate frequency signal obtained from sampling made on each channel is weighted in real number field according to the weighting function to obtain two channels of weighted intermediate frequency signals, wherein the weighting function includes a sine function and a cosine function.

Accordingly, the operation of performing cross summation on the weighted intermediate frequency signals to obtain the two channels of combined intermediate frequency signals includes: intermediate frequency signals weighted by the cosine function are summed; and intermediate frequency signals weighted by the sine function are summed.

Step 102, frequency mixing-based orthogonal demodulation is performed on signals in real number field of the two channels of combined intermediate frequency signals respectively;

specifically, the step includes: signals of two different frequencies are mixed, and the two channels of combined intermediate frequency signals are demodulated using the mixed signal.

Step 103, cross summation is performed on two channels of demodulated intermediate frequency signals and resulting signals are low-pass filtered to obtain signals subjected to DBF.

The disclosure provides a preferred embodiment, a real-time elevation DBF processing method according to the embodiment includes steps as follows.

Step A1, firstly, amplitude weighting in real number field is directly performed on an intermediate frequency signal obtained from sampling made on each channel to obtain two different channels of weighted signals, during which an amplitude weighting value whose orientation is changed in real time is generated according to the principle of elevation DBF;

specifically, an intermediate frequency signal in real number field obtained from sampling made on an nth channel is expressed by formula (1):

$$IF_n(t) = \text{rect}\left(\frac{t - t_n}{T_p}\right)\cos\left(2\pi f_1 t + \pi K_r (t - t_n)^2 - 2\pi f_c t_n\right)(1)$$

where $T_p$ represents pulse width, $t$ is time in range direction, $t_n$ represents round-trip delay of an echo received by the nth channel, $f_1$ represents intermediate frequency, $K_r$ represents frequency modulation rate, and $f_c$ represents cutoff frequency.

According to the principle of DBF, weighting values of various channels are baseband signals based on complex number field, thus the weighting function is a function in complex number field, a DBF weighting function for the nth channel is expressed by formula (2):

$$\omega_n(t) = \exp\left(j \cdot \varphi_n(t)\right) \qquad (2)$$

According to the weighting function in real number field expressed by formula (2), weighting functions in real number field according to the embodiment are $\cos(\varphi_n(t))$ and $\sin(\varphi_n(t))$. Weighted intermediate frequency signals can be represented by formula (3):

$$IFC_n(t) = \text{rect}\left(\frac{t-t_n}{T_p}\right)\cos\left(2\pi f_1 t + \pi K_r(t-t_n)^2 - 2\pi f_c t_n\right)\cos\left(\varphi_n(t)\right)$$

$$= \frac{1}{2}\text{rect}\left(\frac{t-t_n}{T_p}\right)\left[\cos\left(2\pi f_1 t + \pi K_r(t-t_n)^2 - 2\pi f_c t_n + \varphi_n(t)\right) + \cos\left(2\pi f_1 t + \pi K_r(t-t_n)^2 - 2\pi f_c t_n - \varphi_n(t)\right)\right]$$

(3)

and

$$IFS_n(t) = \text{rect}\left(\frac{t-t_n}{T_p}\right)\cos\left(2\pi f_1 t + \pi K_r(t-t_n)^2 - 2\pi f_c t_n\right)\sin\left(\varphi_n(t)\right)$$

$$= \frac{1}{2}\text{rect}\left(\frac{t-t_n}{T_p}\right)\left[\sin\left(2\pi f_1 t + \pi K_r(t-t_n)^2 - 2\pi f_c t_n + \varphi_n(t)\right) - \sin\left(2\pi f_1 t + \pi K_r(t-t_n)^2 - 2\pi f_c t_n - \varphi_n(t)\right)\right]$$

(4)

where $IFC_n(t)$ represents an intermediate frequency signal, weighted by a cosine function, of the nth channel, and $IFS_n(t)$ represents an intermediate frequency signal, weighted by a sine function, of the nth channel;
then, cross summation is performed on amplitude-weighted signals in real number field obtained on respective channels to obtain two channels of combined intermediate frequency signals;
specifically, all intermediate frequency signals weighted by the cosine function are summed into one channel of combined intermediate frequency signal, similarly, all intermediate frequency signals weighted by the sine function are summed into one channel of combined intermediate frequency signal, thus two channels of combined intermediate frequency signals are obtained which can be represented by formulas (5) and (6) respectively:

$$IFC(t) = \sum_1^N IFC_n(t) \qquad (5)$$

and

$$IFS(t) = \sum_1^N IFS_n(t) \qquad (6)$$

Step A2, two channels of intermediate frequency signals in real number field obtained from the cross summation are demodulated respectively using two improved orthogonal demodulation schemes, cross summation is performed on two channels of demodulated intermediate frequency signals and resulting signals are low-pass filtered to obtain a real part and an imaginary part of a signal subjected to DBF.
Specifically, two channels of intermediate signals obtained from the cross summation are mixed respectively with $\cos(f_1(t))$, $-\sin(f_1(t))$ and $\sin(f_1(t))$, $\cos(f_1(t))$ then cross summation are performed, resulting signals are low-pass filtered to obtain signals which can be expressed by below formula:

$$I = \text{LPF}\left[IFC(t)\cdot\cos\left(f_1(t)\right) + IFS(t)\cdot\sin\left(f_1(t)\right)\right]$$

$$= \frac{1}{2}\sum_1^N\left\{\text{rect}\left(\frac{t-t_n}{T_p}\right)\left[\cos\left(\pi K_r(t-t_n)^2 - 2\pi f_c t_n + \varphi_n(t)\right)\right]\right\}$$

$$Q = \text{LPF}\left[IFC(t)\cdot\left[-\sin\left(f_1(t)\right)\right] + IFS_n(t)\cdot\cos\left(f_1(t)\right)\right]$$

$$= \frac{1}{2}\sum_1^N\left\{\text{rect}\left(\frac{t-t_n}{T_p}\right)\left[\sin\left(\pi K_r(t-t_n)^2 - 2\pi f_c t_n + \varphi_n(t)\right)\right]\right\}$$

(7)

where LPF(-) represents a low-pass filtering operation. The signals thus obtained are namely the real part and the imaginary part of the signal subjected to DBF.
By means of the real-time elevation DBF processing method according to the embodiment of the disclosure, numbers of real multipliers used during the implementation according to the disclosure under different numbers of channels are all obviously smaller than those according to the prior arts, and the complexity of computation in an SAR system can be reduced greatly when DBF is implemented, thereby reducing effectively complexity of real-time DBF processing and shortening time taken by elevation DBF.

In order to implement the above method, an embodiment of the disclosure further provides a real-time elevation DBF processing device, Fig. 2 is a schematic structural diagram of the real-time elevation DBF processing device according to the embodiment of the disclosure, as shown in Fig. 2, the real-time elevation DBF processing device includes:

> an arithmetic unit 201 configured to perform weighting and summing processing on an intermediate frequency signal obtained from sampling made on each channel to obtain two channels of combined intermediate frequency signals;
> a demodulation unit 202 configured to perform frequency mixing-based orthogonal demodulation on signals in real number field of the two channels of combined intermediate frequency signals respectively; and
> a low-pass filtering unit 203 configured to perform cross summation on two channels of demodulated intermediate frequency signals and low-pass filter resulting signals.

Here, the arithmetic unit 201 is configured to weight the intermediate frequency signal obtained from sampling made on each channel, and perform cross summation on weighted intermediate frequency signals.

Here, the arithmetic unit 201 is specifically configured to generate the weighting function according to the principle of elevation DBF, and weight, in real number field, the intermediate frequency signal obtained from sampling made on each channel according to the weighting function to obtain two channels of weighted intermediate frequency signals, the weighting function comprising a sine function and a cosine function.

Here, the arithmetic unit 201 is specifically configured to sum intermediate frequency signals weighted by the cosine function and sum intermediate frequency signals weighted by the sine function.

Here, the demodulation unit 202 is specifically configured to mix signals of two different frequencies and demodulate the two channels of combined intermediate frequency signals using the mixed signal.

By means of the real-time elevation DBF processing device, the intermediate frequency signal obtained from sampling made on each channel is processed in the arithmetic unit to obtain two channels of combined intermediate frequency signals, and the two channels of combined signals are demodulated respectively by the demodulation unit, then demodulated intermediate frequency signals are filtered by the low-pass filtering unit to obtain the desired signals.

In addition, in practical applications, the arithmetic unit 201, the demodulation unit 202 and the low-pass filtering unit 203 can each be implemented by a Central Processing Unit (CPU), a Micro Processor Unit (MPU), a Digital Signal Processor (DSP) or a Field Programmable Gate Array (FPGA) in a terminal.

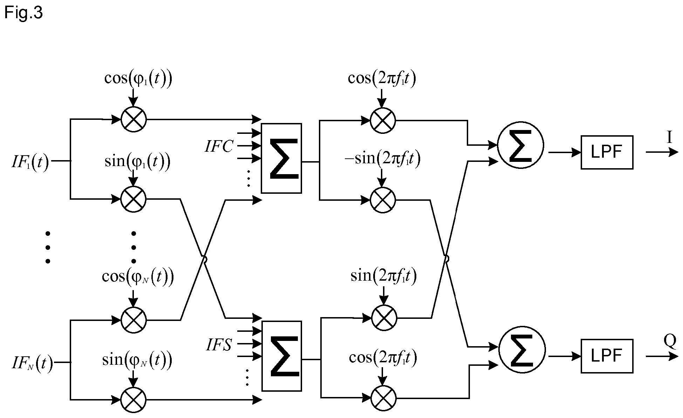

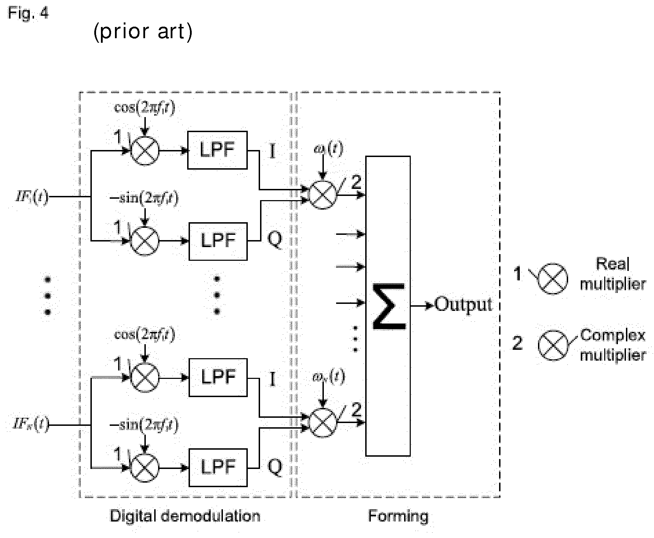

Fig. 3 is a schematic diagram showing the principle for implementing real-time elevation DBF processing according to a preferred embodiment of the disclosure, Fig. 4 is a schematic diagram showing the principle for implementing real-time elevation DBF processing according to the prior arts; in Fig. 4, the bold $\otimes$ represents a complex multiplier 2, the not bold $\otimes$ represents a real multiplier 1. Based on the principles shown in Figs. 3 and 4, the improvement on the complexity of computation made by the embodiments of the disclosure can be obtained through comparison of numbers of real multipliers required in the improved DBF method according to the embodiments of the disclosure and in the conventional DBF method, which comparison is as follows.

Assuming the M is the number of real multipliers required by a low-pass filtering operation and N is the number of channels, then optimized complex multipliers can be implemented by 3 real multipliers.

The total number of real multipliers required by the conventional DBF is

$$T_1 = N \cdot (2 + 2 \cdot M + 3) \quad (8)$$

The number of real multipliers required by the DBF method according to the embodiments of the disclosure can be represented by:

$$P_1 = N \cdot 2 + 4 + 2 \cdot M \quad (9)$$

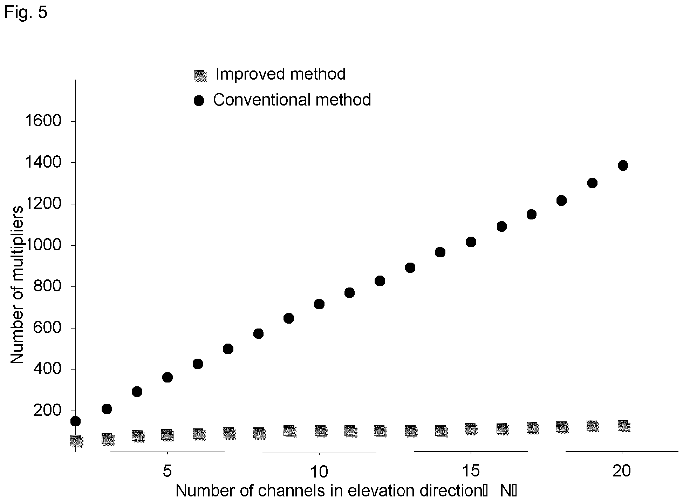

Assuming M=32, a chart can be obtained that shows a comparison of numbers of real multipliers required by the improved DBF method and the conventional DBF method as a function of the number of channels, Fig. 5 shows a comparison of the number of real multipliers used in an embodiment of the disclosure and in the prior arts, a curve consisting of round spots represents a relationship between the number of elevation channels and the number of multipliers in the conventional method, and a curve consisting of square spots represents a relationship between the number of elevation channels and the number of multipliers in the improved method according to the disclosure.

It can be seen from Fig. 5 that the complexity of DBF processing can be considerably reduced using the improved DBF processing method provided by the disclosure.

In the real-time elevation DBF processing method and device provided by the embodiments of the disclosure, weighting and summing processing is performed on an intermediate frequency signal obtained from sampling made on each channel to obtain two channels of combined intermediate frequency signals; frequency mixing-based orthogonal demodulation is performed on signals in real number field of the two channels of combined intermediate frequency signals respectively; and cross summation is performed on two channels of demodulated intermediate frequency signals and resulting signals are low-pass filtered to obtain signals subjected to DBF. In this way, numbers of real multipliers used during the implementation according to the disclosure under different numbers of channels are all obviously smaller than those according to the prior arts, and the complexity of computation in an SAR system can be reduced greatly when DBF is implemented, thereby reducing effectively complexity of real-time DBF processing and shortening time taken by elevation DBF.

**Claims**

1. A real-time elevation Digital Beam-Forming, DBF, processing method, **characterized by** comprising:

   performing weighting and summing processing on an intermediate frequency signal obtained from sampling made on each channel to obtain two channels of combined intermediate frequency signals (101);
   performing frequency mixing-based orthogonal demodulation on signals in real number field of the two channels of combined intermediate frequency signals respectively (102); and
   performing cross summation on two channels of demodulated intermediate frequency signals and low-pass filtering resulting signals (103),
   wherein performing frequency mixing-based orthogonal demodulation on the two channels of combined intermediate frequency signals respectively (102) comprises:
   mixing signals of two different frequencies, and demodulating the two channels of combined intermediate frequency signals using the mixed signal.

2. The method according to claim 1, wherein performing weighting and summing processing on the intermediate frequency signal obtained from sampling made on each channel to obtain the two channels of combined intermediate frequency signals (101) comprises:

   weighting the intermediate frequency signal obtained from sampling made on each channel according to a weighting function generated according to the principle of elevation DBF; and
   performing cross summation on weighted intermediate frequency signals.

3. The method according to claim 2, wherein weighting the intermediate frequency signal obtained from sampling made on each channel comprises:

   generating the weighting function according to the principle of elevation DBF; and
   weighting, in real number field, the intermediate frequency signal obtained from sampling made on each channel according to the weighting function to obtain two channels of weighted intermediate frequency signals;
   wherein the weighting function comprises a sine function and a cosine function.

4. The method according to claim 3, wherein performing cross summation on the weighted intermediate frequency signals to obtain the two channels of combined intermediate frequency signals (101) comprises:

   summing intermediate frequency signals weighted by the cosine function; and
   summing intermediate frequency signals weighted by the sine function.

5. A real-time elevation Digital Beam-Forming, DBF, processing device, **characterized by** comprising:

   an arithmetic unit (201) configured to perform weighting and summing processing on an intermediate frequency signal obtained from sampling made on each channel to obtain two channels of combined intermediate frequency signals;
   a demodulation unit (202) configured to perform frequency mixing-based orthogonal demodulation on signals in real number field of the two channels of combined intermediate frequency signals respectively; and
   a low-pass filtering unit (203) configured to perform cross summation on two channels of demodulated intermediate frequency signals and low-pass filter resulting signals,
wherein the demodulation unit (202) is configured to mix signals of two different frequencies and demodulate the two channels of combined intermediate frequency signals using the mixed signal.

6. The device according to claim 5, wherein the arithmetic unit (201) is configured to weight the intermediate frequency signal obtained from sampling made on each channel, and perform cross summation on weighted intermediate frequency signals.

7. The device according to claim 6, wherein the arithmetic unit (201) is specifically configured to generate the weighting function according to the principle of elevation DBF, and weight, in real number field, the intermediate frequency signal obtained from sampling made on each channel according to the weighting function to obtain two channels of weighted intermediate frequency signals, the weighting function comprising a sine function and a cosine function.

8. The device according to claim 7, wherein the arithmetic unit (201) is specifically configured to sum intermediate frequency signals weighted by the cosine function and sum intermediate frequency signals weighted by the sine function.


**Patentansprüche**

1. Ein Verarbeitungsverfahren für digitale Strahlformung, DBF, in Elevation, **dadurch gekennzeichnet, dass** sie umfasst:

    Ausführung von Gewichtungs- und Summierungsverarbeitung auf einem Zwischenfrequenzsignal, das durch Sampling erhalten wird, das an jedem Kanal stattfindet, um zwei Kanäle kombinierter Zwischenfrequenzsignale (101) zu erhalten;
    Durchführung von frequenzmischungsbasierter orthogonaler Demodulierung auf Signalen jeweils in einem realen Zahlenfeld der zwei Kanäle kombinierter Zwischenfrequenzsignale (102); und
    Durchführung von Quersummierung der demodulierten Zwischenfrequenzsignale und
    Tiefpassfilterergebnissignale (103) auf zwei Kanälen, wobei die Durchführung von frequenzmischungsbasierter orthogonaler Demodulierung auf den jeweils zwei Kanälen kombinierter Zwischenfrequenzsignale (102) umfasst:
    Mischen der Signale von zwei verschiedenen Frequenzen und Demodulierung der beiden Kanäle kombinierter Zwischenfrequenzsignale unter Verwendung des gemischten Signals.

2. Verfahren nach Anspruch 1, wobei die Ausführung von Gewichtungs- und Summierungsverarbeitung auf dem Zwischenfrequenzsignal, das durch Sampling erhalten wird, das an jedem Kanal stattfindet, um die beiden Kanäle kombinierter Zwischenfrequenzsignale (101) zu erhalten, umfasst:

    Gewichtung des Zwischenfrequenzsignals, das durch Sampling an jedem Kanal einer Gewichtungsfunktion, die nach dem Grundsatz der Elevations-DBF erzeugt wurde, entsprechend erhalten wird; und
    Durchführung der Quersummierung auf gewichtete Zwischenfrequenzsignale.

3. Verfahren nach Anspruch 2, wobei die Gewichtung des durch Sampling auf jedem Kanal erhaltenen Zwischenfrequenzsignals umfasst:

    Erzeugung der Gewichtungsfunktion nach dem Grundsatz der Elevations-DBF; und
    Gewichtung des Zwischenfrequenzsignals, das von Sampling an jedem Kanal nach der Gewichtungsfunktion erhalten wurde, in dem ersten Zahlenfeld, um zwei Kanäle gewichteter Zwischenfrequenzsignale zu erhalten;
    wobei die Gewichtungsfunktion eine Sinusfunktion und eine Kosinusfunktion umfasst.

4. Verfahren nach Anspruch 3, wobei die Ausführung der Quersummierung auf die gewichteten Zwischenfrequenzsignale, um die beiden Kanäle kombinierter Zwischenfrequenzsignale (101) zu erhalten, umfasst:
    Summierung der Zwischenfrequenzsignale, die durch die Kosinusfunktion gewichtet sind; und Summierung der Zwischenfrequenzsignale, die durch die Sinusfunktion gewichtet sind.

5. Eine Verarbeitungsvorrichtung für digitale Strahlformung, DBF, in Elevation, **dadurch gekennzeichnet, dass** sie umfasst:

eine arithmetischen Einheit (201), konfiguriert zur Ausführung von Gewichtungs- und Zusammenfassungsverarbeitung auf einem Zwischenfrequenzsignal, das durch Sampling erhalten wird, das an jedem Kanal stattfindet, um zwei Kanäle kombinierter Zwischenfrequenzsignale zu erhalten; eine Demodulierungseinheit (202), konfiguriert zur Durchführung von frequenzmischungsbasierter orthogonaler Demodulierung auf Signalen jeweils in einem realen Zahlenfeld der zwei Kanäle kombinierter Zwischenfrequenzsignale; und eine Tiefpassfiltereinheit (203), konfiguriert zur Durchführung der Quersummierung auf zwei Kanälen demodulierter Zwischenfrequenzsignale und Tiefpassfilterergebnissignale, wobei die Demodulierungseinheit (202) konfiguriert ist zum Mischen von Signalen von zwei verschiedenen Frequenzen und Demodulieren der beiden Kanäle kombinierter Zwischenfrequenzsignale unter Verwendung des gemischten Signals.

6. Vorrichtung nach Anspruch 5, wobei die arithmetische Einheit (201) konfiguriert ist, das Zwischenfrequenzsignal, das durch Sampling auf jedem Kanal erhalten wurde, zu gewichten, und die Quersummierung der gewichteten Zwischenfrequenzsignale auszuführen.

7. Vorrichtung nach Anspruch 6, wobei die arithmetische Einheit (201) spezifisch konfiguriert ist, die Gewichtungsfunktion dem Grundsatz der Elevations-DBF entsprechend zu erzeugen und in dem realen Nummernfeld das Zwischenfrequenzsignal, das aus dem Sampling jedes Kanals der Gewichtungsfunktion zum Erhalt von zwei Kanälen gewichteter Zwischenfrequenzsignale erhalten wurde, zu gewichten, wobei die Gewichtungsfunktion eine Sinusfunktion und eine Kosinusfunktion umfasst.

8. Vorrichtung nach Anspruch 7, wobei die arithmetische Einheit (201) spezifisch konfiguriert ist, die Zwischenfrequenzsignale, die mit der Kosinusfunktion gewichtet sind, zu summieren, und die Zwischenfrequenzsignale, die mit der Sinusfunktion gewichtet sind, zu summieren.

**Revendications**

1. Procédé de traitement par formation de faisceau numérique à élévation, DBF, en temps réel, **caractérisé en ce qu'**il comprend de :

effectuer un traitement de pondération de somme sur un signal de fréquence intermédiaire obtenu à partir d'un échantillonnage effectué sur chaque canal pour obtenir deux canaux de signaux de fréquence intermédiaire combinés (101) ; effectuer une démodulation orthogonale basée sur mélange de fréquence sur des signaux dans le champ de numéro réel des deux canaux de signaux de fréquence intermédiaire combinés respectivement (102) ; et effectuer une somme croisée sur deux canaux de signaux de fréquence intermédiaire du module et un filtrage passe bas des signaux de résultat (103), dans lequel effectuer une démodulation orthogonale basée sur mélange de fréquence sur les deux canaux de signaux de fréquence intermédiaire combinés respectivement (102) comprend de : mélanger des signaux de fréquence différents et démoduler les deux canaux de signaux de fréquence intermédiaire combinés en utilisant le signal mélangé.

2. Procédé selon la revendication 1, dans lequel effectuer un traitement de pondération et de somme sur le signal de fréquence intermédiaire obtenu à partir de l'échantillonnage effectué sur chaque canal pour obtenir les deux canaux de signaux de fréquence intermédiaire combiné (101) comprend de :

pondérer le signal de fréquence intermédiaire obtenu à partir de l'échantillonnage effectué sur chaque canal selon une fonction de pondération générée selon le principe de DBF à élévation ; et effectuer une somme croisée sur les signaux de fréquence intermédiaire pondérés.

3. Procédé selon la revendication 3, dans lequel pondérer le signal de fréquence intermédiaire obtenu à partir d'un échantillonnage effectué sur chaque canal comprend de :

générer la fonction de pondération selon le principe de DBF à élévation ; et pondérer, dans le champ de numéro réel, le signal de fréquence intermédiaire obtenu à partir d'un échantillonnage effectué sur chaque canal selon la fonction de pondération pour obtenir deux canaux de signaux de fréquence intermédiaire pondérés ;

dans lequel la fonction de pondération comprend une fonction de sinus et une fonction de cosinus.

4. Procédé selon la revendication 3, dans lequel effectuer une somme croisée sur les signaux intermédiaires de fréquence pondérés pour obtenir les deux canaux de signaux de fréquence intermédiaire combinés (101) comprend de :

additionner des signaux de fréquence intermédiaire pondérée par la fonction cosinus ; et

additionner les signaux de fréquence intermédiaire pondérée par la fonction sinus.

5. Dispositif de traitement par formation de faisceau numérique à élévation, DBF, en temps réel, **caractérisé en ce qu'**il comprend :

une unité arithmétique (201) configurée pour effectuer un traitement de pondération de somme sur un signal de fréquence intermédiaire obtenu à partir d'un échantillonnage effectué sur chaque canal pour obtenir deux canaux de signaux de fréquence intermédiaire combinés ;

une unité de démodulation (202) configurée pour effectuer une démodulation orthogonale basée sur mélange de fréquence sur des signaux dans le champ de numéro réel des deux canaux de signaux de fréquence intermédiaire combinés respectivement; et

une unité de filtrage passe bas (203) configurée pour effectuer une somme croisée sur deux canaux de signaux de fréquence intermédiaire démodulés et un filtrage passe bas des signaux de résultat,

dans lequel l'unité de démodulation (202) est configurée pour mélanger des signaux de deux fréquences différentes et démoduler les deux canaux de signaux de fréquence intermédiaire combinés en utilisant le signal mélangé.

6. Dispositif selon la revendication 5, dans lequel l'unité arithmétique (201) est configurée pour pondérer le signal de fréquence intermédiaire obtenu à partir de d'échantillonnage effectué sur chaque canal et effectuer une somme croisée sur les signaux de fréquence intermédiaire pondérés.

7. Dispositif selon la revendication 6, dans lequel l'unité arithmétique (201) est spécifiquement configurée pour générer la fonction de pondération selon le principe de DBF à élévation, et pondérer, dans le champ de numéro réel, le signal de fréquence intermédiaire obtenu à partir d'un échantillonnage effectué sur chaque canal selon la fonction de pondération pour obtenir deux canaux de signaux de fréquence intermédiaire pondérée, la fonction de pondération comprenant une fonction de sinus et une fonction de cosinus.

8. Dispositif selon la revendication 7, dans lequel l'unité arithmétique (201) est spécifiquement configurée pour additionner des signaux de fréquence intermédiaire pondérée par la fonction cosinus et additionner des signaux de fréquence intermédiaire pondérés par la fonction sinus.

Fig.1

| Weighting and summing processing is performed on an intermediate frequency signal obtained from sampling made on each channel to obtain two channels of combined intermediate frequency signals | 101 |

| Frequency mixing-based orthogonal demodulation is performed on signals in real number field of the two channels of combined intermediate frequency signals respectively | 102 |

| Cross summation is performed on two channels of demodulated intermediate frequency signals and resulting signals are low-pass filtered | 103 |

Fig.2

| Arithmetic unit | 201 |

| Demodulation unit | 202 |

| Low-pass filtering unit | 203 |

Fig.3

Fig. 4

(prior art)

Digital demodulation

Forming

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PAULSEN LEE et al.** Impact: a low cost, reconfigurable, digital beamforming common module building block for next generation phased arrays. *Proc. SPIE 9479, Open Architecture/Open Business Model Net-Centric Systems and Defense Transformation 2015,* 21 May 2015, vol. 947906